# EUROPEAN PATENT SPECIFICATION

(11) **EP 4 056 299 B1**
(45) Date of publication and mention of the grant of the patent: **11.06.2025**
(21) Application number: 20884750.9
(22) Date of filing: 06.11.2020
(51) Int. Cl.: B22F 1/00, B22F 1/16, B33Y 70/10, C22C 33/02, C22C 38/42, C22C 38/48, B22F 10/25, B22F 10/28, B22F 10/34, B82Y 30/00

(54) **POWDER MATERIAL**
PULVERMATERIAL
MATÉRIAU EN POUDRE

(30) Priority: 08.11.2019 JP 2019203093; 21.10.2020 JP 2020176818
(43) Date of publication of application: 14.09.2022
(73) Proprietor: Daido Steel Co., Ltd., Nagoya-shi Aichi 461-8581 (JP)
(72) Inventor: KAMIMOTO, Asako, Nagoya-shi, Aichi 457-8545 (JP); ITO, Yuki, Nagoya-shi, Aichi 457-8545 (JP)
(74) Representative: Diehl & Partner
(86) International application number: PCT/JP2020/041558
(87) International publication number: WO 2021/090918

(56) References cited:
- EP-A1- 3 187 285
- WO-A1-2011/149101
- WO-A1-2015/194678
- WO-A1-2019/177642
- CN-A- 109 014 179
- JP-A- 2004 332 016
- JP-A- 2004 332 016
- JP-A- 2016 041 850
- JP-A- 2017 179 388
- JP-A- 2019 112 700
- JP-A- 2019 112 700
- JP-A- 2019 157 217
- JP-A- 2019 157 217
- US-A1- 2010 124 514
- US-A1- 2018 214 944
- KARG MICHAEL CORNELIUS HERMANN ET AL: "Expanding particle size distribution and morphology of aluminium-silicon powders for Laser Beam Melting by dry coating with silica nanoparticles", JOURNAL OF MATERIALS PROCESSING TECHNOLOGY, vol. 264, 1 February 2019 (2019-02-01), NL, pages 155 - 171, XP093052496, ISSN: 0924-0136, DOI: 10.1016/j.jmatprotec.2018.08.045

## Description

### TECHNICAL FIELD

The present invention relates to a powder material. In more detail, the present invention relates to a powder material usable as a raw material in additive manufacturing.

### BACKGROUND ART

Additive manufacturing (AM) is advancing remarkably nowadays as a new technology for producing a three-dimensional shaped article. One technique of additive manufacturing is an additive manufacturing method in which the solidification of a powder material by irradiation with an energy beam is utilized. There are two representative additive manufacturing methods employing a metal powder material: powder bed fusion and powder deposition.

Specific examples of the powder bed fusion include method such as selective laser melting (SLM) and electron beam melting (EBM). In these methods, a powder material composed of a metal is fed on a substrate serving as a base to form a powder bed, and a predetermined position of the powder bed is irradiated with an energy beam, such as a laser beam or an electron beam, on the basis of three-dimensional design data. As a result, the powder material in the portions which have undergone the irradiation is solidified through melting and resolidification, and a shaped body is formed. The feeding of the powder material to the powder bed and the shaping by irradiation with the energy beam are repeated to successively superpose the shaped-objects in layers, thereby obtaining a three-dimensional shaped article.

Meanwhile, specific examples of the powder deposition include laser metal deposition (LMD). In this method, a metal powder is sprayed by use of a nozzle to a position where a three-dimensional shaped article should be formed and simultaneously irradiated with a laser beam, thereby forming the three-dimensional shaped article having a desired shape.

In the case where a three-dimensional shaped article composed of a metal material is produced using the above-mentioned additive manufacturing method, a structure having a non-uniform distribution of a constituent material, such as void or defect, is sometimes generated in the obtained three-dimensional shaped article. The generation of such a non-uniform structure is preferably suppressed as much as possible. In the additive manufacturing method using a metal material, a plurality of factors can be considered responsible for the generation of non-uniform distribution of the constituent material in the inside of the three-dimensional shaped article produced. As one of the factors, the state of the powder material before energy beam irradiation can considerably affect the state of the three-dimensional shaped article to be obtained.

For example, in the powder bed fusion, if a powder material can be smoothly fed to a powder bed to stably form a powder bed such that the powder material is uniformly spread, or if a powder material can be packed at a high density in forming a powder bed, then a highly homogeneous three-dimensional shaped article is easy to obtain through the irradiation of the powder bed with an energy beam. In powder deposition also, a three-dimensional shaped article can be stably formed by smoothly feeding a powder material without causing nozzle clogging. Thus, in producing a three-dimensional shaped article by additive manufacturing, in the case where the flowability of the powder material to be used as a raw material is higher, it is possible to facilitate the smooth feeding and highly dense packing of the powder material, making it possible to obtain a highly uniformly shaped article through irradiation with an energy beam.

The present inventors made investigations on powder materials having high flowability and suitable for use as raw materials in additive manufacturing. For example, Patent Document 1 discloses a metal powder material including metal particles having a micrometer-order particle diameter and nanoparticles constituted of a metal or a metal compound which have been adhered to or mixed with the metal particles. The presence of the nanoparticles between the metal particles keeps the metal particles apart from each other at a distance. As a result, attractive forces, mainly including van der Waals force, exerting between the metal particles can be reduced. Patent Document 1 mentions, as a preferred example, an embodiment in which a hydrophobic group, such as, hydrocarbon group represented by phenyl, is bonded to the surface of metal oxide nanoparticles. By causing such nanoparticles having a surface modified with a hydrophobic group to be present between metal particles, the force of adhesion between the metal particles via water can be reduced to increase the flowability of the metal powder material. Document JP 2004-332016 A discloses a powder material including stainless steel particles and anhydrous silica particles. The stainless steel particles have an average particle diameter of 2 to 60 µm.
Document JP 2019-157217 A discloses a powder material including stainless steel particles and nanosilica particles. The stainless steel particles have an average particle size of 10 µm.
Document WO 2019/177642 A1 discloses a powder material including stainless steel particles and fumed silica particles. The stainless steel particles are grade -22 µm, the average particle diameter of which is approximately 11 µm.
Document EP 3 187 285 A1 discloses a powder material including stainless steel particles and silica particles. The stainless steel particles have an average particle size of about 70 µm.
Document JP 2019-112700 A discloses a powder material including iron alloy particles and oxidic particles. The iron alloy particles have an average particle size of about 70 µm.

### CITATION LIST

### PATENT LITERATURE

Patent Document 1: JP-A-2019-112699

### SUMMARY OF INVENTION

### TECHNICAL PROBLEMS

As described in Patent Document 1, in the case where nanoparticles are added to metal particles, the flowability-improving effect due to the nanoparticles can be increased by hydrophobizing the surface of the nanoparticles with an organic substance. Meanwhile, there is a possibility that the presence of the organic substance on the surface of the nanoparticles might exert an influence on the quality of products to be produced from the powder material or on steps for producing the products. For example, in the case where such a powder material is used as a raw material in additive manufacturing and a layer of an organic substance is formed on the surface of the nanoparticles, a hydrocarbon gas derived from the organic substance generates when the nanoparticles melt in a step of additive manufacturing. As a result, there is a possibility that voids may be formed in the structure of the three-dimensional shaped article obtained. If the formation of such voids can be prevented, it is expected that the effect in which the addition of nanoparticles improves the flowability of the powder material and thereby enables a three-dimensional shaped article having a highly uniform structure to be obtained is further increased.

A problem to be solved by the present invention is to provide a powder material which has high flowability and is reduced in the influences of the presence of an organic substance.

### SOLUTION TO THE PROBLEMS

In order to solve the above-mentioned problems, the powder material according to the present invention is a powder material according to claim 1, including metal particles including an iron alloy and having an average particle diameter of 10 µm or larger and 500 µm or smaller, and nanoparticles including a metal or a metal compound and having undergone no surface treatment with an organic substance, wherein the nanoparticles are dendritic fused-bodies.

The nanoparticles are preferably adherent to the metal particles. In the powder material, it is preferably that no agglomerates that are each composed of the nanoparticles and each has a particle diameter of 1 µm or larger is present between the metal particles. In this case, the powder material preferably contains no agglomerates that are each composed of the nanoparticles and each has a particle diameter of 1 µm or larger, in a state of being adherent to the metal particles.

The iron alloy constituting the metal particles is preferably a precipitation-hardening stainless steel. The nanoparticles are preferably silica particles.

### ADVANTAGEOUS EFFECTS OF INVENTION

Since the powder material according to the present invention includes nanoparticles in addition to metal particles, the presence of the nanoparticles between the metal particles keeps the metal particles apart from each other at a distance. As a result, attractive forces exerting between the metal particles are reduced and the flowability of the powder material can be enhanced. Furthermore, since the nanoparticles have undergone no surface treatment with an organic substance, influences of the presence of the organic substance, such as the formation of voids due to the generation of a gas derived from the organic substance, are reduced in using this powder material as a raw material in additive manufacturing. As a result, a three-dimensional shaped article having a highly uniformity and dense structure is easy to obtain, besides the effect in which the addition of the nanoparticles enhances the flowability of the powder material.

In the case where the nanoparticles are adherent to the metal particles, it is easy to stably and highly achieve the reduction of attractive forces exerting between the metal particles.

In the powder material, in the case where no agglomerates that are each composed of nanoparticles and each has a particle diameter of 1 µm or larger are present between the metal particles, this means that nanoparticles are adhered to or mixed with the metal particles in the state of being highly dispersed. The nanoparticles are hence highly effective in improving the flowability of the powder material. In addition, since the content of coarse nanoparticle agglomerates is reduced, the three-dimensional shaped article obtained by additive manufacturing can be inhibited from having defects attributable to nanoparticle agglomerates.

In this case, in the case where the powder material contains no agglomerates that are each composed of the nanoparticles and each has a particle diameter of 1 µm or larger, in a state of being adherent to the metal particles as well, that is, in the case where the nanoparticle agglomerates with a particle diameter of 1 µm or larger are neither present between the metal particles nor formed in a state of being adherent to the metal particles, then those effects are further increased. That is, the effect of improving the flowability of the powder material and the effect of inhibiting the three-dimensional shaped article from having defects are further increased.

In the case where the iron alloy constituting the metal particles is a precipitation-hardening stainless steel, this powder material is in large demand as a raw material in additive manufacturing and gives three-dimensional shaped articles having excellent properties, e.g., hardness, by additive manufacturing.

In the case where the nanoparticles are silica particles, the nanoparticles are highly effective in enhancing the flowability of the powder material. In addition, the influences of the addition of the nanoparticles on the three-dimensional shaped article to be obtained by additive manufacturing can be sufficiently reduced.

Since according to the present invention the nanoparticles constitute fused-bodies in each of which a plurality of nanoparticles is fusion-bonded to each other, the nanoparticles are highly effective in improving the flowability of the powder material.

### BRIEF DESCRIPTION OF DRAWINGS

[FIG. 1] This is a schematic view illustrating a powder material according to one embodiment of the present invention.
[FIG. 2] This is a diagram illustrating one example of production devices capable of producing the powder material, together with a schematic view of powder particles being treated.
[FIG. 3] This is a diagram showing particle size distributions and circularities of powder materials. This figure shows results of examinations of sample #1, which includes no nanoparticles, and sample #2, which was obtained through addition of nanoparticles and dispersing and classifying.
[FIG. 4] This shows particle images of sample #1 and sample #2 used in particle shape evaluation, the particles having a particle diameter in the range of 37±3 µm.
[FIG. 5] These are SEM images of sample #2; (a) is a low-magnification image (×500) including a plurality of particles in the field of view, and (b) is a high-magnification image (×10,000) obtained in an examination of the surface of a metal particle.
[FIG. 6] These show results of elemental analysis by EDX performed on position A1 and position A2 shown in (b) of FIG. 5; (a) shows the results for position A1 and (b) shows the results for position A2.
[FIG. 7] This is a diagram showing bulk-density-normalized shear adhesive forces of samples #1, #2, and #3. Sample #3 was obtained by adding nanoparticles to a material and subjecting the ingredients to mixing only.
[FIG. 8] This shows changes in bulk-density-normalized shear adhesive force of sample #2 with changing nanoparticle addition amount.
[FIG. 9] These show photographs taking the state of powder materials; (a) shows sample #2 and (b) shows sample #3.
[FIG. 10] These are SEM images of sample #3; (a)is a low-magnification image (×400) including a plurality of particles in the field of view, and (b) and (c) are high-magnification images (× 10,000) obtained in observations of the surface of a metal particle. The images of (b) and (c) are ones obtained in observations on different fields of view.
[FIG. 11] (a) is an enlarged SEM image (× 10,000) observation the particle indicated by an arrow at the center of (a) of FIG. 10. (b) shows results of an elemental analysis by EDX on a center portion of the particle observed in (a) of FIG. 11.

### DESCRIPTION OF EMBODIMENTS

A powder material according to one embodiment of the present invention is described in detail below using the drawings for reference. In this description, the wording "containing no X" used for a certain component or for particles having a certain particle diameter or a certain form means not only a state in which the component or the particles are not contained at all but also a state in which the component or the particles are contained as an unavoidable impurity.

### [Powder Material]

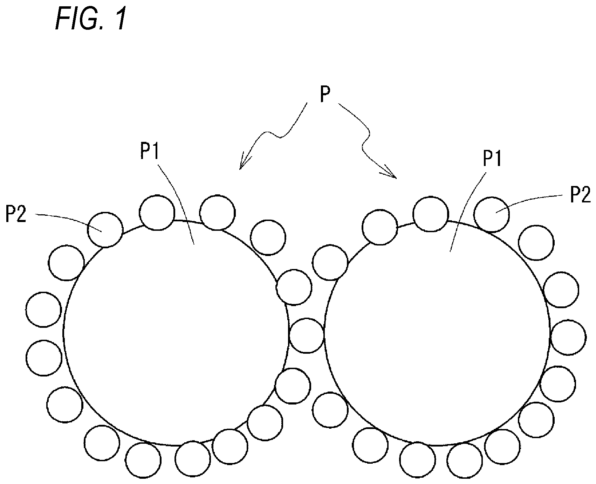

The powder material according to one embodiment of the present invention includes metal particles P1 including an iron alloy and having a micrometer-order particle diameter and nanoparticles P2 including a metal or a metal compound, as illustrated in FIG. 1. The nanoparticles P2 are adherent to the surface of the metal particles P1 to constitute metal particles P having adherent nanoparticles. The nanoparticles P2 have undergone no surface treatment with an organic substance.

The expression "nanoparticles P2 are adherent to metal particles P1" means a state in which an attractive force exerting between the nanoparticle P2 and metal particle P1 is higher than at least an attractive force exerting between the metal particles P1 in the powder material containing no nanoparticles P2. In the powder material, the nanoparticles P2 need not be always adherent to the metal particles P1, and some or all of the nanoparticles P2 may be present in the powder material in the state of having been merely mixed with the metal particles P1. However, from the standpoints of enabling the nanoparticles P2 to be stably held, enhancing the effect of the addition of the nanoparticles P2, etc., the nanoparticles P2 are preferably adherent to the metal particles P1. Hereinafter, embodiments in which the nanoparticles P2 are adherent to the metal particles P1 are mainly explained.

This powder material, which includes the nanoparticles P2 besides the metal particles P1, is suitable for use as, for example, a raw material in additive manufacturing. From the standpoint of preventing a three-dimensional shaped article obtained by additive manufacturing from containing impurities or having defects, this powder material preferably contains no component, except unavoidable impurities, other than the metal particles P1 and the nanoparticles P2. Any component for enhancing the flowability of the powder material, e.g., a lubricant, is preferably not contained, except for the nanoparticles P2. The configuration of the metal particles P1 and that of the nanoparticles P2 are explained below.

### (1) Metal Particles

The metal particles P1 have a particle diameter on the order of micrometer, and the particle diameter thereof can be 10 µm or larger and 500 µm or smaller in terms of average particle diameter (d50). From the standpoint of making the powder material suitable for use as a raw material in additive manufacturing, the average particle diameter is especially preferably 10 µm or larger, and 100 µm or less. From the standpoint of enabling the powder material to have high flowability, the metal particles P1 preferably have a shape which can be regarded as spherical. For example, the metal particles P1 have a circularity of preferably 0.85 or higher, more preferably 0.90 or higher, at the average particle diameter, that is, with respect to particles having a diameter equal to the average particle diameter. The term "average particle diameter (d50)" means a particle diameter at which a median particle size for a volume distribution is 50%.

The metal particles P1 include an iron alloy. Iron alloys are in large demand in additive manufacturing, and powder materials including iron alloys as main components are suitable for use as raw materials in additive manufacturing. In particular, it is preferred to use stainless steels as the iron alloy. Among these, use of a precipitation-hardening stainless steel such as SUS630 alloy is preferable. The metal particles P1 including a precipitation-hardening stainless steel give three-dimensional shaped articles having excellent properties, including hardness, through additive manufacturing step.

The metal particles P1 may contain a metal compound such as an oxide or a carbide, besides the metal component as the main component. Examples of such compounds include compound films, e.g., oxide films, which are unavoidably formed on the surface of the metal particles P1. The metal particles P1 may contain an organic substance. Examples of such organic substances include one attributable to steps for producing the metal particles P1, such as a residue of a raw-material compound, and one which has been disposed as a surface treatment agent on the surface of the metal particles P1. However, the metal particles P1 preferably contain no organic substances which have been added on purpose, such as surface treatment agents, from the standpoints of increasing the flowability-improving effect of the addition of the nanoparticles P2 and reducing the influences of organic substances on additive manufacturing step or on additive manufacturing articles obtained.

Methods for producing the metal particles P1 are not particularly limited. However, the metal particles P1 can be suitably produced by an atomization method. Although various methods including a gas atomization method and a disk atomization method can be applied, especially suitable is the gas atomization method, from the standpoints of the efficiency of producing the metal particles P1, etc.

### (2) Nanoparticles

The nanoparticles P2 are not particularly limited in particle diameter so long as the particle diameter thereof is on the order of nanometer. However, preferred examples thereof include particle diameters of 1 nm or larger and 100 nm or smaller.

The nanoparticles P2 are not particularly limited in shape either, and may have any shape such as an approximately spherical shape, a polyhedral shape, or irregular shapes. From the standpoint of effectively improving the flowability of the powder material, the nanoparticles P2 preferably have an approximately spherical shape. The nanoparticles P2 are fused-bodies in each which a plurality of primary particles having a shape of, for example, an appropriately spherical shape, is fusion-bonded to each other. The "fusion bonding of primary particles" means adhesion due to interatomic bonds formed through melting, which are not easily loosened by the dispersing or classifying which will be explained later, unlike agglomerates. The fused-body has a dendritic structure in which preferably rows of fusion-bonded primary particles extend in various directions. In such a configuration, the nanoparticles P2 can largely exhibit the effect of keeping the metal particles P1 apart from each other at a distance to reduce attractive forces exerting between the metal particles P1 and thereby improving the flowability, which will be explained later in detail, even in a small amount of addition, as compared with the case where the nanoparticles P2 are present in the form of primary particles. The primary particles constituting the fused-bodies preferably have a particle diameter of 1 nm or larger and 100 nm or smaller as stated above, and fused-bodies as a whole preferably has a particle diameter (length of a longest straight line crossing the fused-body) of 25 nm or larger and 500 nm or smaller.

The nanoparticles P2 may include either a metal or a metal compound. However, the nanoparticles P2 preferably include a metal compound, from the standpoint of effectively reducing the attractive forces exerting between the metal particles P1 in the powder material. Examples of the metal compound include metal oxides, metal nitrides, and metal carbides. Preferred of these are metal oxides, from the standpoints of low activity, easy availability of the nanoparticles, etc. The kinds of the metals constituting the metal compounds are not particularly limited. However, preferred is an embodiment using a light-metal element such as Si, Al, and Ti. Nanoparticles of oxides of these elements (SiO₂, Al₂O₃, TiO₂, etc.) are produced by established production methods and are easily available, and are less apt to exert a serious influence even when having come into three-dimensional shaped articles composed of metal through additive manufacturing step.

It is especially preferred to use an oxide of Si (silica) as the nanoparticles P2. The nanoparticles P2 including silica are highly effective in reducing the attractive forces exerting between the metal particles P1 and are easily available. In addition, the nanoparticles P2 including silica show somewhat high dispersibility even when having undergone no surface treatment.

The nanoparticles P2 have undergone no surface treatment with an organic substance. That is, the surface of the nanoparticles P2 is not coated with any organic substance except organic components which are present unavoidably, such as a residue derived from a starting material for production and a substance which has adhered from the environment. Consequently, the metal or metal oxide constituting the nanoparticles P2 is exposed in the surface of the nanoparticles P2. The nanoparticles P2 may contain a component other than the metal or metal compound as the main component, so long as the component does not form an organic-substance layer covering the surface.

### (3) Properties of the Powder Material

In the powder material according to the present embodiment, the nanoparticles P2 are adherent to the surface of the metal particles P1, thereby constituting metal particles P having adherent nanoparticles. Alternatively, the nanoparticles P2 are mixed with the metal particles P1. Accordingly, nanoparticles P2 are present between adjacent metal particles P1, thereby keeping the metal particles P1 apart from each other at a distance not shorter than the particle diameter of the nanoparticles P2 (or of fused-bodies thereof). Attractive forces, including van der Waals force and electrostatic attractive force, exerting between metal particles P1 decrease as the distance between the metal particles P1 increases. That is, by keeping the metal particles P1 apart from each other at a distance by the presence of the nanoparticles P2, the attractive forces exerting between the metal particles P1 are reduced. Thus, the powder including the metal particles P1 is reduced in shear adhesive force (τs) and, as a result, the flowability of the powder material can be enhanced.

For example, by the adhesion of the nanoparticles P2, the shear adhesive force of the powder including the metal particles P1 can be reduced to 55% or less, especially 50% or less, of the shear adhesive force of the powder containing no nanoparticles P2. Furthermore, the powder material can have a bulk-density-normalized shear adhesive force (τs/ρ), which is a value obtained by normalizing the shear adhesive force (τs) with the bulk density (ρ) of the powder material, of 0.07 (m/s)² or less, especially 0.05 (m/s)² or less.

In the case where a powder material has high flowability, this powder material is suitable for use as a raw material in additive manufacturing. For example, in the case of conducting a powder bed fusion, e.g., SLM or EBM, among additive manufacturing methods, a powder material is fed from a hopper and spread on a base to form a powder bed. In this step, in the case where the powder material has high flowability, this powder material can be made to stably flow out of the hopper. In addition, in the case where the powder material is spread by using a recoater or the like to form a powder bed, the spreading of this powder material can be easily performed at a high density and uniformly. Thus, that a powder material has high flowability is important for stably forming a powder bed having high uniformity and a high density. In the case where such powder bed having high uniformity and a high density is irradiated with an energy beam to conduct additive manufacturing, a homogeneous three-dimensional shaped article having few defects is easily formed. Also in additive manufacturing by powder deposition methods including LMD, the use of a powder material having excellent flowability can make the powder material be stably fed to the nozzle. In addition, the nozzle can be inhibited from being clogged when the powder material is jetted therefrom together with an air stream toward portions where shaping is performed, and the shaping can be made to proceed stably.

In the powder material according to the present embodiment, the nanoparticles P2 have undergone no surface treatment with an organic substance. This also enhances the suitability of the powder material for use as a raw material in additive manufacturing. If the nanoparticles P2 have undergone a surface treatment with an organic substance, a hydrocarbon gas derived from the organic substance covering the nanoparticles P2 is undesirably generated when the powder material is irradiated with an energy beam and the nanoparticles P2 are melted together with the metal particles P1 in additive manufacturing step. There are hence cases where the three-dimensional shaped article produced by the additive manufacturing has voids, which are spaces not occupied by the metal material, formed in portions where gas has generated. The formation of such voids causes the structure of the three-dimensional shaped article to have a non-uniform distribution, and this lessens the effect of the increased flowability of the powder material for increasing the homogeneity of shaped articles to be obtained. However, by using nanoparticles P2 which have undergone no surface treatment with an organic substance, the possibility of yielding an additive manufacturing article having voids formed therein due to the organic substance present on the surface of nanoparticles P2 can be eliminated. As a result, in the case where the powder material is used as a raw material in additive manufacturing, in combination with the effect of the increased flowability of the powder material, a highly uniform and dense structure is easy to obtain in an additive manufacturing article formed.

The powder material according to the present embodiment preferably contains no coarse agglomerates of nanoparticles P2. The powder material is desirably one in which no agglomerates of nanoparticles P2 are observed at least in a visual observation. In the case where coarse agglomerates of nanoparticles P2 are contained in the powder material, it is possible that such agglomerates may reduce the flowability of the powder material. This is because the nanoparticles P2 constituting the agglomerates cannot contribute to reducing the attractive forces exerting between the metal particles P1 to enhance the flowability by presence between the metal particles. Such agglomerates rather lessen the effect of reducing the attractive forces exerting between the metal particles P1 and enhancing the flowability, because the amount of nanoparticles P2 capable of adhering to the surface of the metal particles P1 has decreased by the amount of the nanoparticles P2 consumed by forming the agglomerates. In addition, agglomerates of nanoparticles P2 are prone to form defects serving as starting points for fracture in the additive manufacturing article. Hence, by reducing the content of agglomerates of nanoparticles P2 in the powder material, from both standpoints of ensuring the flowability of the powder material and eliminating the starting points for fracture, a three-dimensional shaped article having a homogeneous structure with few defects can be easily produced through additive manufacturing step.

Preferably, no agglomerates that are each composed of nanoparticles P2 and each has a particle diameter of 1 µm or larger are present between the metal particles P1 in the powder material. In other words, the powder material preferably contains no agglomerates of nanoparticles P2 which have a particle diameter of 1 µm or larger in a state of not adherent to the metal particles P1 (i.e., isolated state). As a result, the effects of improving the flowability of the powder material and eliminating starting points for fracture in the three-dimensional shaped article are increased. More preferably, the powder material does not contain agglomerates of nanoparticles P2 which have a particle diameter of 1 µm or larger in any state other than the isolated state, including in a state of being adherent to the metal particles P1. As a result, the effects of improving the flowability and eliminating starting points for fracture are further increased. Furthermore, with respect to agglomerates having a particle diameter less than 1 µm, the powder material also preferably does not contain such agglomerates in an isolated state or another state. Whether agglomerates are contained or not and the particle diameter thereof may be evaluated by observing the powder material with a scanning electron microscope (SEM), and the particle diameter of an agglomerate can be calculated as the length of a longest straight line crossing the agglomerate in an SEM image. The nanoparticles P2 are preferably in the state of having formed no agglomerates, or in the case where agglomerates of nanoparticles P2 have been formed, smaller agglomerates are preferred. There is hence no lower limit on the particle diameter of the agglomerates. However, even when agglomerates having a particle diameter as small as about 500 nm or less have been formed, these agglomerates do not exert a considerable influence on the flowability of the powder material, and a labor required for completely loosening agglomerates can be saved.

Since the nanoparticles P2 in the powder material according to the present embodiment have undergone no surface treatment with an organic substance, there are cases where the nanoparticles P2 are prone to be agglomerated via water. However, by sufficiently loosening the agglomerates beforehand, the properties of the powder material as a raw material for additive manufacturing can be increased. For example, by performing a dispersing step and a classifying step in powder-material production in the manner explained below, a powder material can be efficiently produced in which the nanoparticles P2 are adherent, in a dispersed state where agglomeration is loosened, to the surface of metal particles P1 although the nanoparticles P2 have undergone no surface treatment with an organic substance.

In the powder material, the metal particles P having adherent nanoparticles have a particle diameter and a shape which substantially keep the particle diameter and shape of the metal particles P1 themselves. In the case where the powder material is for use as a raw material in additive manufacturing, the average particle diameter of the metal particles P having adherent nanoparticles is preferably about 10-100 µm. The circularity thereof at the average particle diameter is preferably 0.85 or higher, more preferably 0.90 or higher.

### [Method for Producing the Powder Material]

One example of methods for producing the powder material is explained here. In this method, a raw-material preparation step, a dispersing step, and a classifying step are conducted in this order. As stated above, the nanoparticles P2 to be contained in this powder material have undergone no surface treatment with an organic substance and may agglomerate between particles. However, by performing a dispersing step and a classifying step, the agglomeration of nanoparticles P2 can be loosened. A production device for use in producing the powder material and the production steps are explained in order below.

### (1) Production Device

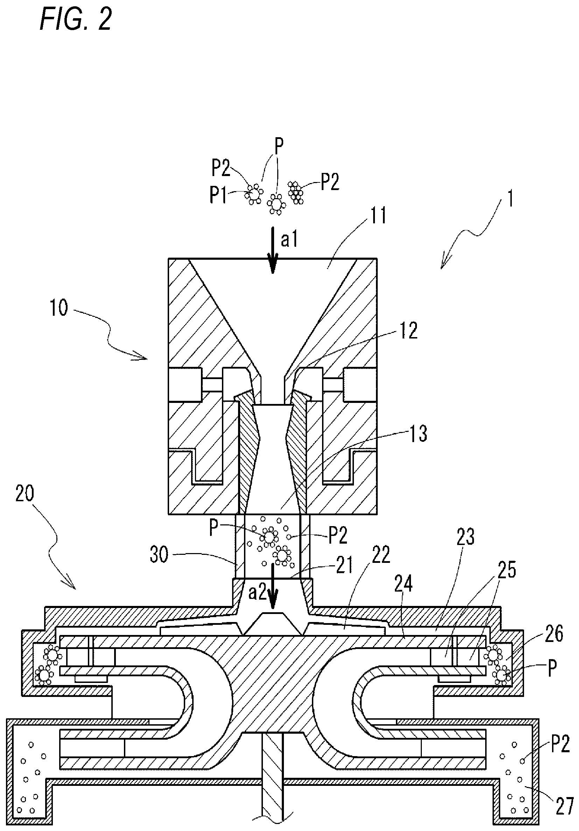

FIG. 2 illustrates an example of powder-material production devices 1 usable in producing the powder material. The powder-material production device 1 includes a disperser 10 and a classifier 20. The disperser 10 is a device capable of dispersing agglomerated powder particles. The classifier 20 is a device capable of classifying powder particles, that is, sorting powder particles by particle diameter. The disperser 10 is disposed upstream and the classifier 20 is disposed downstream, along the flow direction of powder particles, so that powder particles discharged from the disperser 10 are introduced into the classifier 20.

The disperser 10 and the classifier 20 may have any structures for dispersing and classifying powder particles, and a connection structure between the disperser 10 and the classifier 20 is also not particularly limited in its structure. It is, however, preferred to use an air disperser as the disperser 10 and an air classifier as the classifier 20. In a preferred configuration, a discharge opening 13 of the disperser 10 is directly connected to a feed opening 21 of the classifier 20 so that powder particles discharged through the discharge opening 13 of the disperser 10 together with an air stream are introduced directly, i.e., without coming into contact with the surrounding environment, into the feed opening 21 of the classifier 20.

As the disperser 10, it is preferred to use an air disperser such as that disclosed in JP-A-H4-330957. In this kind of air disperser 10, a high-velocity air stream is jetted from a ring nozzle 12. Powder particles fed through the feed opening 11 are drawn in by a negative pressure caused by the air stream, and the drawn powder particles are caused to collide with the high-velocity air stream. The powder particles are accelerated by the air stream to collide with each other or against the wall surface of the device and to receive shear force. As a result, the agglomerated state of particles is loosened and dispersed. The powder particles which have undergone the dispersing are discharged through the discharge opening 13 together with an air stream.

As the classifier 20, it is preferred to use an air classifier such as the forced-vortex air classifier disclosed in JP-A-2003-145052. In this kind of air classifier 20, dispersing blades 22 are rotated to generate an air stream, and the powder particles introduced through the feed opening 21 are dispersed by the shear force from the air stream and fed, in the dispersed state, to a classification zone 23 including classifying blades 25. In the classification zone 23, the powder particles receive both centrifugal force due to a classifying rotor 24, which is rotating at a high speed, and resistant force due to the air stream. The particles which are being thus treated undergo the centrifugal force and resistant force according to the particle diameters and are classified thereby. Particles having large diameters, which undergo high centrifugal force, move to a coarse-powder zone 26, while particles having small diameters, which undergo high resistant force, move to a fine-powder zone 27. By selecting operation conditions for the classifier 20, particles having a desired particle diameter can be selected out in the coarse-powder zone 26.

In the case where the disperser 10 and the classifier 20 are an air disperser and an air classifier, the discharge opening 13 of the disperser 10 and the feed opening 21 of the classifier 20 can be directly connected to each other by suitably using a piping member 30. As a result, the powder particles discharged from the disperser 10 together with an air stream are directly introduced into the classifier 20. Thus, a step in which powder particles are dispersed by the disperser 10 and a step in which the powder particles are classified by the classifier 20 can be successively conducted.

### (2) Raw-Material Preparation Step

In producing a powder material, a raw-material preparation step is conducted before the dispersing and classifying with the powder-material production device 1 to prepare a raw-material powder for producing the powder material. The raw-material powder includes metal particles P1 and nanoparticles P2, and particles such as those explained above may be prepared respectively as the metal particles P1 and the nanoparticles P2. In this case, it is desirable to suitably regulate beforehand the particle size distributions of the metal particles P1 and nanoparticles P2. In particular, with respect to the metal particles P1, it is preferred to perform classification beforehand to select out metal particles P1 having a desired particle diameter according to an intended use of the powder material, e.g., additive manufacturing. As stated above, the nanoparticles P2 to be used are fused-bodies. The fused-bodies can be produced, for example, by a method in which nanoparticles are formed by a dry process and the nanoparticles in which the surface is molten, for example, with a flame are caused to collide with each other. In the dispersing step which will be described later, the nanoparticles P2 are highly dispersed and are uniformly mixed with and adhered to the metal particles P1. Hence, in this raw-material preparation step, when the metal particles P1 are mixed with the nanoparticles P2, the uniformity of mixing need not be heightened so much. For example, manual stirring may suffice.

As a result of the mixing, at least some of the nanoparticles P2 adhere to the surface of the metal particles P1 to constitute metal particles P having adherent nanoparticles. Meanwhile, another some of the nanoparticles P2 have mutually agglomerated to form agglomerates before being mixed with the metal particles P1, and there are cases where the agglomerated state is kept even after the mixing with the metal particles P1. There are also cases where during the mixing with the metal particles P1, agglomerates of nanoparticles P2 are newly formed.

The amount of the nanoparticles P2 to be contained in the raw-material powder may be suitably selected in accordance with the degree in improvement of the flowability that is required to the powder material to be produced, etc. However, from the standpoint of sufficiently obtaining the effect of reducing the van der Waals force exerting between the metal particles P1 and improving the flowability, in a preferred embodiment, the amount of the nanoparticles P2 is, for example, preferably 0.001 mass% or larger, more preferably 0.003 mass% or larger, based on the mass of the metal particles P1. Meanwhile, from the standpoint of inhibiting the formation of agglomerates due to an excess amount of nanoparticles P2, the content thereof is, for example, preferably 0.5 mass% or less, more preferably 0.1 mass% or less. In the case where nanoparticles P2 are added in excess, not only the effect of reducing the van der Walls force exerting between the metal particles P1 is saturated but also adhesive force comes to exert between nanoparticles P2 adherent to an adjacent metal particles P1 and this may reduce, rather than increase, the flowability of the powder material. Incidentally, the content of the nanoparticles P2 in the raw-material powder remains substantially unchanged even after the subsequent dispersing step and classifying step.

### (3) Dispersing Step

In the dispersing step, the raw-material powder prepared in the raw-material preparation step is introduced into the disperser 10 to loosen the agglomeration of nanoparticles P2 in the raw-material powder.

It is only required to charge the raw-material powder into the feed opening 11 of the air disperser 10 (arrow a1 in the figure) in the powder-material production device 1. In the disperser 10, an air stream is jetted against the raw-material powder to disperse and mix the particles constituting the raw-material powder with each other. Simultaneously therewith, collisions between particles and against the wall of the device occur and shear force due to the air stream is applied, thereby loosening the agglomerated state of agglomerates of nanoparticles P2 contained in the raw-material powder. As a result, the nanoparticles P2 come into a highly dispersed state, and at least some of these are dispersed and mixed with the metal particles P1 and adhere to the surface of the metal particles P1.

### (4) Classifying Step

In the classifying step, powder particles which have undergone the dispersing step and been discharged from the disperser 10 are introduced into the classifier 20, and the powder particles are classified. By the classification, metal particles P having adherent nanoparticles, which is composed of metal particles P1 and nanoparticles P2 adherent thereto, are selected out and sorted.

In the powder-material production device 1, the discharge opening 13 of the air disperser 10 is connected to the feed opening 21 of the air classifier 20, so that the powder particles which have undergone the dispersing step are directly introduced into the classifier 20 together with an air stream (arrow a2 in the figure) and classified by the classifier 20. The powder particles which have undergone the dispersing step and are being introduced into the classifier 20 from the disperser 10 can unavoidably include dispersed nanoparticles P2 not adherent to the surface of metal particles P1, i.e., agglomeration-loosened nanoparticles P2, besides the metal particles P having adherent nanoparticles, which is composed of metal particles P1 and nanoparticles P2 adherent thereto. However, through the classifying step, the dispersed nanoparticles P2 not adherent to the surface of metal particles P1 move to the fine-powder zone 27 and are separated from the metal particles P having adherent nanoparticles. Furthermore, even in the case where agglomerates of nanoparticles P2 which the agglomerated state could not be completely loosened in the dispersing step coexist in the powder particles, such agglomerates can also be separated from the metal particles P having adherent nanoparticles. Thus, the metal particles P having adherent nanoparticles can be separated from components which differ in particle diameter therefrom, such as dispersed nanoparticles P2 and agglomerates of nanoparticles P2, and can be selected out via the coarse-powder zone 26.

As described above, even when a raw-material powder contains agglomerates of nanoparticles P2, it is possible to loosen the agglomerated structure of nanoparticles P2 to produce a powder material including high-purity metal particles P having adherent nanoparticles, which is composed of metal particles P1 and finely dispersed nanoparticles P2 adherent to the surface thereof through the dispersing step and the classifying step successively. The powder material thus produced need not be subjected thereafter to an operation such as sieving in order to remove agglomerates of nanoparticles P2. As described above, a powder material containing no coarse agglomerates with a particle diameter of, for example, 1 µm or larger which are not adherent to the metal particles can be advantageously produced by subjecting a raw-material powder obtained by mixing metal particles P1 with nanoparticles P2 to the dispersing step and the classifying step.

### EXAMPLES

The present invention is explained in more detail below using Examples, in which how the states and properties of powder materials were changed by adding nanoparticles was examined.

### (Production of Samples)

Metal particles including an Fe-17Cr-4Ni-4Cu-0.3Nb alloy (each affixed number indicates concentration in mass%), corresponding to SUS630 alloy, were produced by a gas atomization method. The metal particles were classified under the conditions of +15/-45 µm. The obtained metal powder was referred to as sample #1.

The metal powder of sample #1 was mixed with SiO₂ nanoparticles ("TECNAPOW-SIO2", manufactured by TECNAN Ltd.; average particle diameter of primary particles is 10-15 nm) which had undergone no surface treatment to obtain a raw-material powder. The SiO₂ nanoparticles used above were dendritic fused-bodies in each of which a plurality of approximately spherical primary particles is fusion-bonded each other. The nanoparticles were added in an amount of 0.010 mass% based on the mass of the metal particles. The obtained raw-material powder was fed to the same powder-material production device as that shown in FIG. 2, including an air disperser (ring-nozzle jet type disperser "DN-155", manufactured by Nisshin Engineering Co., Ltd.) and an air classifier (turbo-classifier "TC-15", manufactured by Nisshin Engineering Co., Ltd.) connected thereto, and was dispersed and classified. Metal particles having nanoparticles adherent thereto were selected out as sample #2. With respect to sample #2, metal powders obtained by classifying the metal particles under the conditions of +15/-45 µm and of -45 µm, respectively, were used with different amounts of the nanoparticles to produce samples. Moreover, a powder obtained by mixing the metal powder of sample #1 with the SiO₂ nanoparticles using a shaking powder mixer was referred to as sample #3.

### (Evaluation of Powder Materials)

First, in order to examine the state of the metal particles to which the nanoparticles had been added, sample #1 and sample #2 were evaluated for particle size distribution. In this evaluation, a particle image analyzer was used to evaluate the particles for shape. On the basis of the particle shapes, each sample was evaluated for particle size distribution, and the circularity of each particle was determined. Meanwhile, in order to examine the state of the nanoparticles in the powder materials, sample #2 and sample #3 were subjected to a visual observation, imaging with a digital camera, and an SEM observation and were subjected to elemental analysis in which narrow areas in the surface of metal particles were examined by energy dispersive X-ray spectroscopy (EDX) using an SEM.

Moreover, the powder materials were examined for change in flowability due to the addition of the nanoparticles. Specifically, samples #1, #2, and #3 were examined for bulk-density-normalized shear adhesive force (τs/ρ). In the examination, a rotating-cell type shearing tester was used to apply pressures (σ) to each powder material and shear stresses (τ) caused by the pressure application were measured, in accordance with JIS Z 8835. The values of σ and τ were plotted as abscissa and ordinate, respectively, and an ordinate-intercept of the plot was taken as a shear adhesive force (τs). Furthermore, each sample was examined for bulk density (ρ) using a bulk specific gravity tester for metal powders in accordance with JIS Z 2504. Each examination was made under the conditions of an air temperature of 23 □ and a relative humidity RH of 24%. With respect to sample #2, samples obtained with different nanoparticle addition amounts were subjected to the same examinations.

### (Results of the Evaluation)

### (1) State of Powder Material

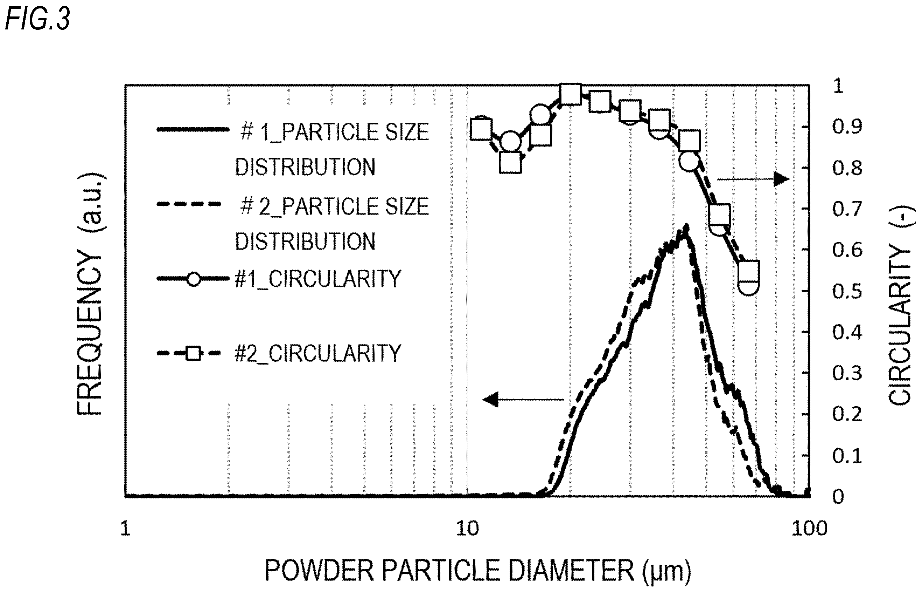

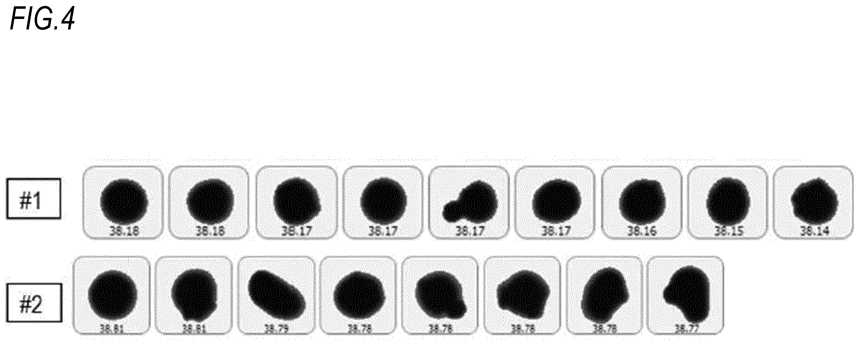

FIG. 3 shows results of the evaluation of particle size distribution and the circularity for each of the particle diameters, with respect to sample #1, which was composed of metal particles to which nanoparticles had not been added, and sample #2, which included metal particles and nanoparticles added thereto. In Table 1, parameters regarding particle size distribution are shown. FIG. 4 shows particle images of samples #1 and #2, which are images of particles having a particle diameter, corresponding to an average particle diameter, of 37±3 µm as examples of particle images used in obtaining the circularity shown in FIG. 3. Average values of the circularity obtained from these particle images were 0.89 for sample #1 and 0.92 for sample #2. The circularity for each particle diameter shown in FIG. 3 is an average value likewise calculated for the particle diameter range of ±3 µm.

**[Table 1]**

| | Particle diameter (µm) | | |
|---|---|---|---|
| | d10 | d50 | d90 |
| Sample #1 | 24 | 38 | 57 |
| Sample #2 | 23 | 36 | 51 |

FIG. 3 shows that the particle size distribution of sample #1, to which nanoparticles had not been added, and the particle size distribution of sample #2, to which nanoparticles had been added, were highly akin to each other in median and width. The representative values for sample #1 and those for sample #2 shown in Table 1 are also considerably close to each other. That is, sample #1 and sample #2 had approximately the same particle size distribution, and it was ascertained that the particle size distribution of the sample particles had undergone substantially no change through the addition of nanoparticles.

A comparison between the particle images of sample #1 and those of sample #2 given in FIG. 4 shows that in many of the particles, there was no large difference in particle shape between the two samples. The two samples were substantially equal also in the average value of the circularity estimated from these particle images. Furthermore, according to FIG. 3, the two samples were substantially equal in the circularity throughout the whole particle diameter range. That is, it was ascertained that the circularity also had undergone substantially no change through the addition of nanoparticles.

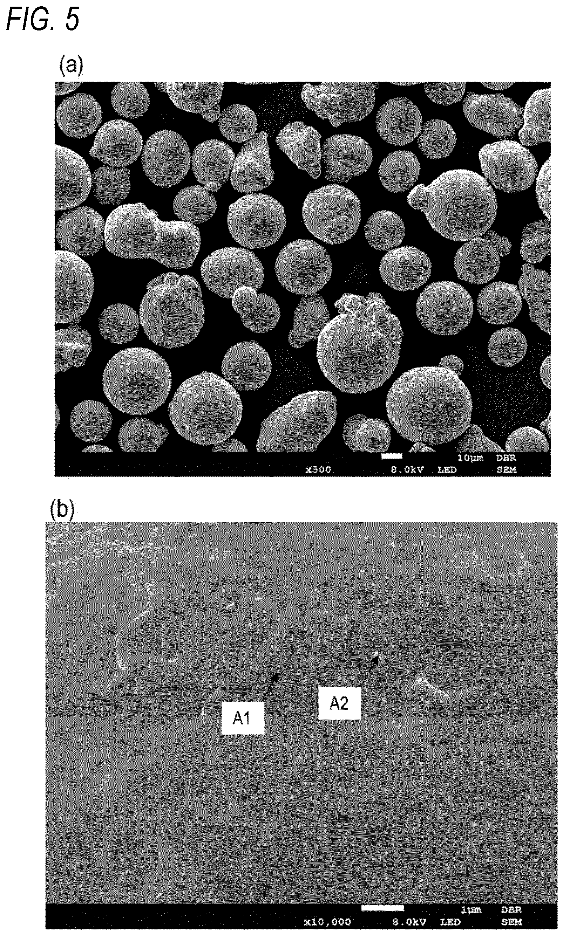

In FIG. 5, SEM images of sample #2 are shown. In the low-magnification image of (a) of FIG. 5, metal particles having particle shapes and particle diameters corresponding with those of the particle images given in FIG. 4 were observed. Furthermore, in the high-magnification image of (b) of FIG. 5, which shows an enlarged image of the surface of a metal particle, a large number of adherent particles ranging in size from tens of nanometers to hundreds of nanometers were observed in positions indicated as position A2.

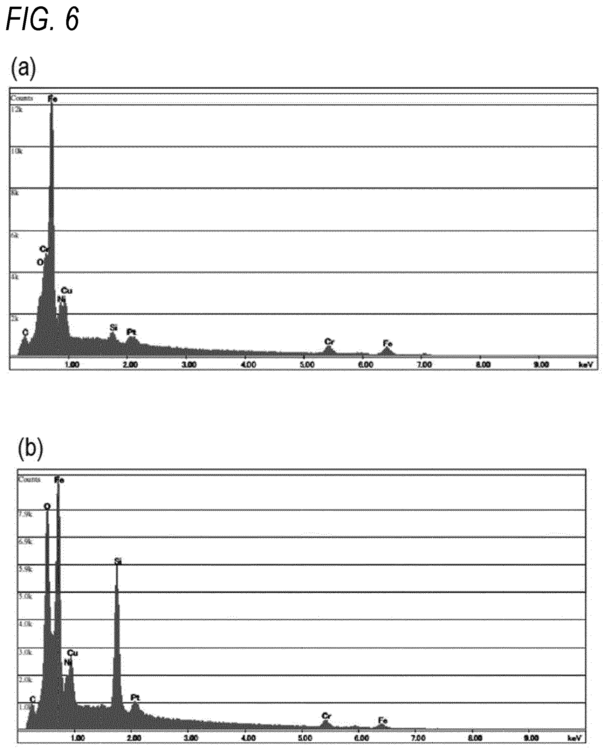

Moreover, with respect to position A1, where no adherent particle was present, and position A2, where an adherent particle was present, in (b) of FIG. 5, elemental analysis by EDX was performed, and results thereof are given in (a) of FIG. 6 and (b) of FIG. 6, respectively. The results show that in position A1, where a surface of the metal particle which had no nanoparticle adherent thereto and was composed of an Fe-17Cr-4Ni-4Cu-0.3Nb alloy was thought to be observed, only the elements constituting the alloy were detected as major elements present. In position A2, where a nanoparticle was adherent, the same elements as in position A1 were detected but the concentrations of O and Si were far higher than in position A1. This is thought to be attributable to an SiO₂ nanoparticles. That is, the adherent particles observed in the SEM image were thought to be SiO₂ nanoparticles adherent to the surface of the metal particle. As can be ascertained from the SEM image of (b) of FIG. 5, the SiO₂ nanoparticles were adherent to the surface of the metal particle in a highly dispersed state. It was thus ascertained that a powder material in which nanoparticles have adhered to the surface of metal particles in a dispersed state can be produced by adding nanoparticles to the metal particles and subjecting the mixture to dispersing and classifying steps.

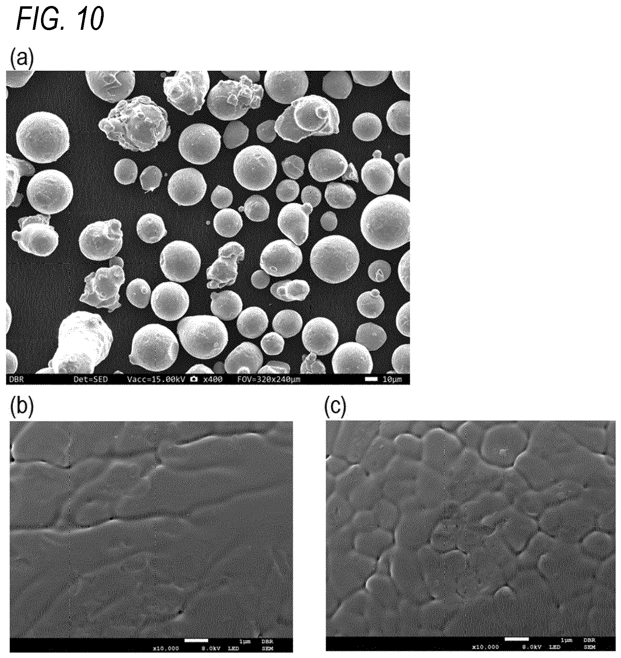

Although SiO₂ nanoparticles were ascertained to be dispersedly adherent to the surface of metal particles, no coarse agglomerates of SiO₂ nanoparticles were observed in the SEM images. If nanoparticles had formed coarse agglomerates such as ones having a particle diameter of 1 µm or larger and were present in an isolated state without being adherent to the metal particles, such agglomerate particles should have been observed in the space between metal particles in the low-magnification image of (a) of FIG. 5 (see (a) of FIG. 10). However, such particles are not observed in the actual SEM image of (a) of FIG. 5. Such coarse agglomerates were not present in the state of being adherent to the surface of the metal particles either. Incidentally, although in the SEM image of (a) of FIG. 5, there are a plurality of metal particles each having a projection of an irregular shape with a size of micrometers to tens of micrometers formed on the surface thereof, these projections are derived from metal particles. It was ascertained from these results that no SiO₂ nanoparticles in the form of agglomerates having a particle diameter of 1 µm or larger were present at least in an isolated state, and such agglomerates are considered to have been not present in any state other than the isolated state either.

Thus, as described above, the particle diameter and circularity of the particles constituting a powder material had undergone substantially no change even through the addition of nanoparticles, and it was ascertained that the addition of nanoparticles and the dispersing and classifying steps exerted no influence on the particle shape or particle size of the metal particles. It was also ascertained from the results of the examination with an SEM that the added nanoparticles were dispersedly adherent to the surface of the metal particles without forming coarse agglomerates. It was ascertained that in powder-material properties, such as the shear adhesive force, whose evaluation results are shown next, any changes which have occurred upon the addition of nanoparticles were not due to a change in particle shape or particle size but were results of the addition of the nanoparticles itself.

### (2) Flowability of Powder Material

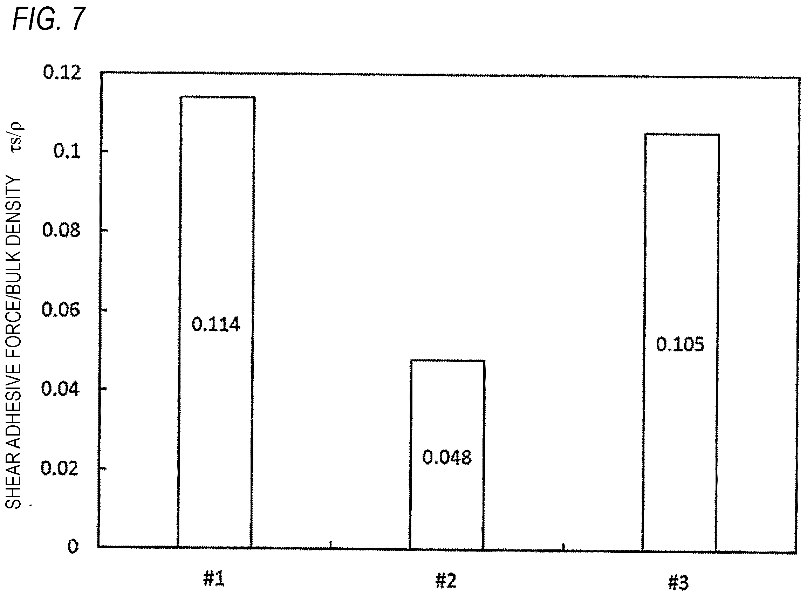

In FIG. 7, measurement results of bulk-density-normalized shear adhesive force (τs/ρ) with respect to sample #1 and sample #2. The unit is (m/s)².

FIG. 7 shows that sample #2, to which nanoparticles had been added, had a value reduced to about 40% of a value of sample #1, to which no nanoparticles had been added. These results are thought to be because in sample #2, nanoparticles were present between the metal particles and reduced the attractive forces between the metal particles to improve the flowability. Although nanoparticles which had undergone no surface treatment were used, these nanoparticles nevertheless were highly effective in improving the flowability of the powder material. The measurement results of sample #3 will be explained later.

### (3) Nanoparticle Addition Amount and Flowability

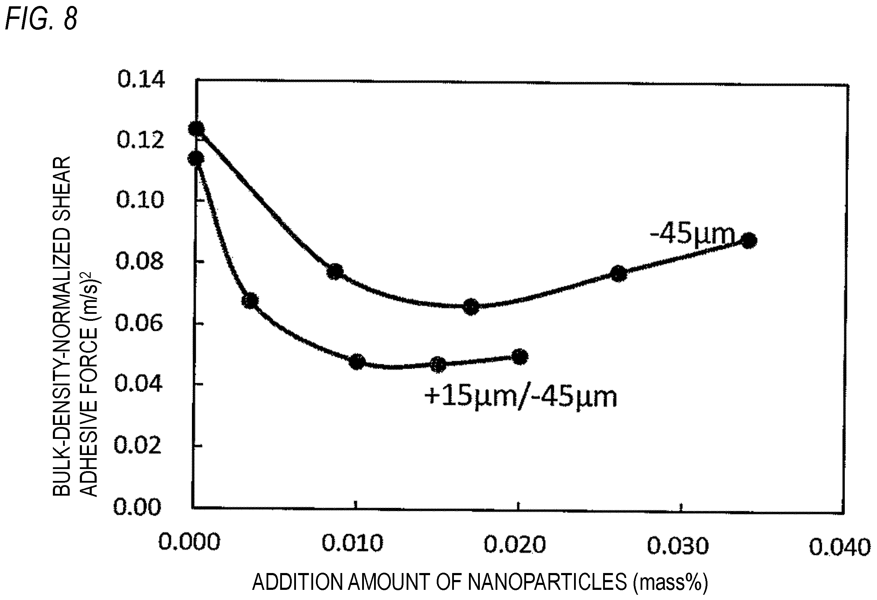

In FIG. 8, results of measurements of bulk-density-normalized shear adhesive force (τs/ρ) with different nanoparticle addition amounts are shown. The abscissa indicates the addition amount of nanoparticles based on the mass of the metal particles, the unit thereof being mass%. The results show that under any classification conditions, the bulk-density-normalized shear adhesive force decreased steeply as the addition amount increased, at least in a region up to an addition amount of 0.003 mass%, or further in a region up to an addition amount of about 0.010 mass%. However, in a region ranging from an addition amount of 0.010 mass% to about 0.020 mass%, the decrease in addition amount is saturated, although this tendency was stronger especially in the sample obtained under the classification conditions of -45 µm. As the addition amount increased further, the bulk-density-normalized shear adhesive force came to increase gently. In the sample obtained under the classification conditions of -45 µm, the bulk-density-normalized shear adhesive force had a minimal value when the addition amount was roughly about 0.015 mass%.

The reason why the bulk-density-normalized shear adhesive force decreased steeply as the nanoparticle addition amount increased, in the region where the addition amount was small, is that the increase in the density of nanoparticles present between the metal particles resulted in keeping the metal particles apart from each other at a distance and hence in a decrease in the van der Waals force exerting between the metal particles. The reason why the decrease in bulk-density-normalized shear adhesive force with increasing addition amount is saturated while the addition amount is increased in the region where the nanoparticle addition amount was larger is considered to be that even when the density of nanoparticles was further increased in the powder material in such a state that the metal particles were substantially not in contact with each other due to the effect of the nanoparticles present therebetween, then the increase in nanoparticle density was unable to increase the distance between the metal particles. The reason why the bulk-density-normalized shear adhesive force came to increase gently in the region where the nanoparticle addition amount was still larger is considered to be that an adhesive force was exerting between nanoparticles being adherent to a metal particle and nanoparticles being adherent to an adjacent metal particle to reduce the flowability of the metal particles having the nanoparticles being adherent thereto. The difference in classification conditions affects the magnitude of bulk-density-normalized shear adhesive force but exerts no considerable influence on the tendency of behavior with addition amount.

### (4) Influence of Production Method on the State of Powder Material

As explained above, in the powder material of sample #2, which had been produced via dispersing and classifying steps, the nanoparticles were in the state of dispersedly being adherent to the surface of the metal particles. How the dispersing and classifying steps affected the state of the powder material was examined.

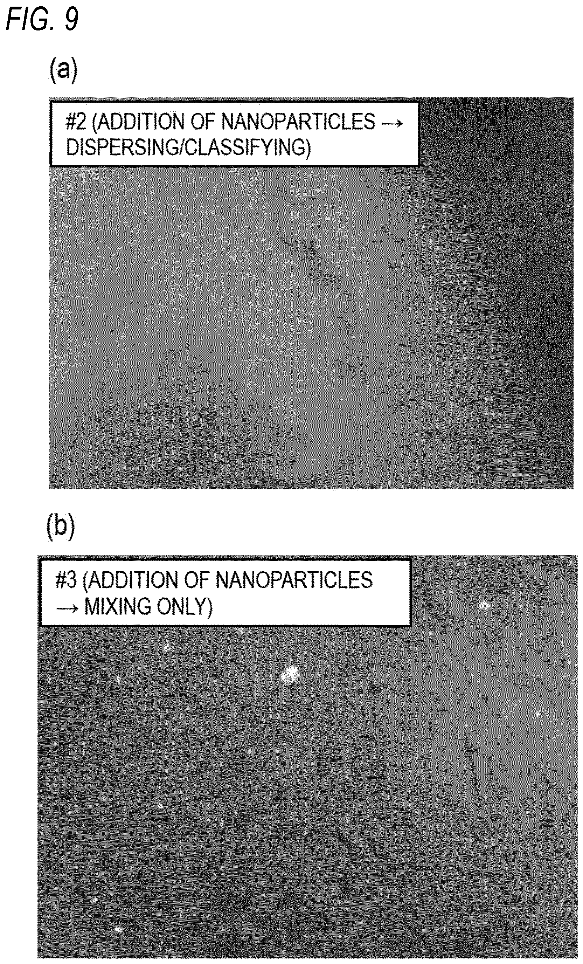

In (a) of FIG.9 and (b) of FIG. 9, results of imaging the state of the powder materials of samples #2 and #3 with a digital camera respectively. First, in the powder material of (b) of FIG. 9, which had been produced only through mixing by a powder mixer, brightly observed particulate substances were dotted in a mass of fine powder which was observed darkly. These particulate substances had diameters of about 1 mm, and, from a comparison in color, etc., can be regarded as corresponding to agglomerates of SiO₂ nanoparticles. It is thought that the SiO₂ nanoparticles used as a raw material had formed an agglomerated structure before being mixed with metal particles and the agglomerated structure was not completely loosened by the mere mixing by the powder mixer.

Meanwhile, with respect to sample #2, which had been produced by subjecting a powder material to dispersing and classifying, a dark fine powder was uniformly observed throughout the whole image shown in (a) of FIG. 9, and no brightly observed particulate substances, such as those in (b) of FIG. 9, were observed. That is, a highly uniform powder material was yielded as sample #2. This indicates that by subjecting a raw-material powder to the dispersing and classifying steps, the agglomerated state of SiO₂ nanoparticle agglomerates contained in the raw-material powder was loosened to increase the dispersibility of the nanoparticles.

Thus, in sample #3, which had been produced without performing dispersing and classifying, it was ascertained from the appearance of the powder material that SiO₂ nanoparticles had formed coarse agglomerates having sizes on the order of millimeter. The state of SiO₂ nanoparticles in a smaller area was observed with an SEM. In FIG. 10, SEM images of sample #3 are shown. In the low-magnification image in (a) of FIG. 10, metal particles having similar shape and size to those in the image of sample #2 in (a) of FIG. 5 were observed. In (a) of FIG. 10, however, particles having smaller particle diameters than those metal particles were distributed among the metal particles, as indicated by the arrow. The particle diameters of these small-diameter particles were roughly 1 µm or larger and 5 µm or smaller. The particle diameter of the particle indicated by the arrow was 2.8 µm. Such small-diameter particles were not observed in the image of sample #2 in (a) of FIG. 5.

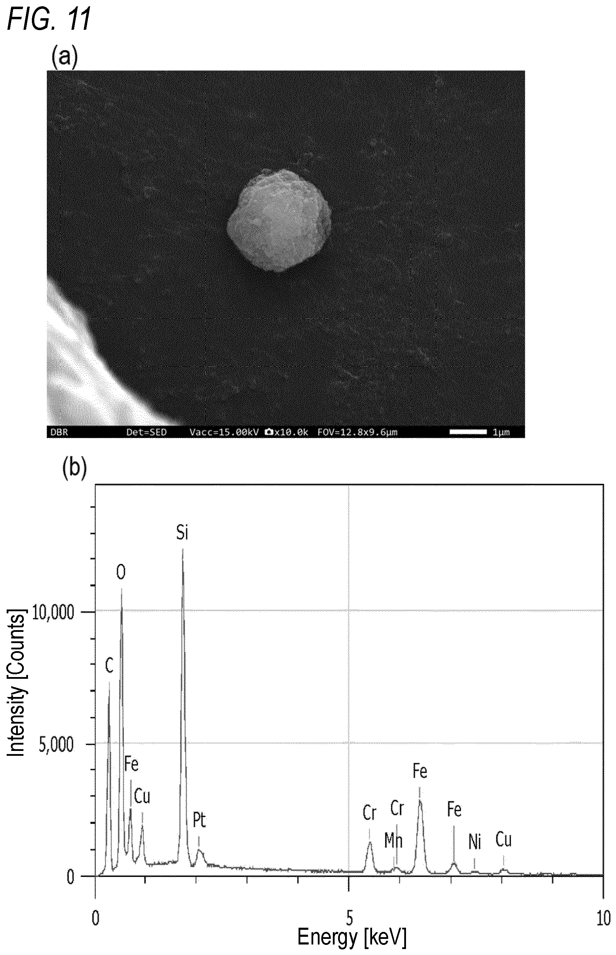

In (a) of FIG. 11, an enlarged image of the small-diameter particle indicated by the arrow in (a) of FIG. 10 is shown. This enlarged image shows that the particle had an approximately spherical shape having minute unevenness in the surface and had a particle diameter of 2.8 µm as stated above. In (b) of FIG. 11, results of an elemental analysis by EDX of a center portion of the particle are shown. The results show that intense peaks attributable to Si and O were observed while peaks indicating the presence of small amounts of the elements thought to be derived from the metal particles. It can be considered from these results that the observed small-diameter particle was derived from SiO₂ nanoparticles. Since the nanoparticles used as a raw material had a primary-particle diameter of 10-15 nm and the fused-bodies had a particle diameter on the order of 100 nm at the most, the observed small-diameter particle is thought to be an agglomerate formed by the agglomeration of a large number of SiO₂ nanoparticles (or of fused-bodies thereof). It can be seen from these results of the SEM observation and EDX analysis that in sample #3, some of the SiO₂ nanoparticles had formed agglomerates having a particle diameter of 1 µm or larger and were dispersed in the state of being not adherent to the metal particles. That is, the SiO₂ nanoparticles had formed not only millimeter-order agglomerates such as those observed in (b) of FIG. 9 but also micrometer-order agglomerates.

In (b) of FIG. 10 and (c) of FIG. 10, enlarged SEM images of different areas of the surface of a metal particle of sample #3 are shown. At least in the area shown in (b) of FIG. 10, substantially no nanometer-order adherent particles, such as those observed on the metal-particle surface in sample #2 of (b) of FIG. 5, were observed. In the area shown in (c) of FIG. 10 also, only several adherent particles were observed. That is, it can be considered that in sample #3, the adhesion of SiO₂ nanoparticles to the surface of the metal particles had scarcely occurred. Even if the adhesion had occurred, the density of the adherent SiO₂ nanoparticles was far lower than in sample #2. It can hence be understood that in sample #3, a large proportion of the SiO₂ nanoparticles had been consumed by the formation of millimeter-order and micrometer-order agglomerates and this resulted in a small amount of nanoparticles which were capable of being adhere to the surface of the metal particles.

As shown above, in sample #3, which had been obtained by merely mixing metal particles and SiO₂ nanoparticles with a powder mixer, the SiO₂ nanoparticles had formed agglomerates having a particle diameter of 1 µm or larger and had been distributed, in an isolated state without being adherent to the metal particles, in the powder material. The density of SiO₂ nanoparticles being adherent to the surface of the metal particles was exceedingly low. Meanwhile, in sample #2, which had been produced through the dispersing step and the classifying step as explained above, the agglomerated state of SiO₂ nanoparticles had been loosened by the dispersing and classifying steps and, because of this, the SiO₂ nanoparticles were in the state of being finely dispersed and adherent to the surface of the metal particles, without being in the form of isolated agglomerates having a particle diameter of 1 µm or larger.

Finally, sample #2 and sample #3 are compared with respect to the flowability of the powder material. In FIG. 7 the bulk-density-normalized shear adhesive forces (τs/ρ) of samples #1, #2, and #3 are shown. Sample #3, in which nanoparticles had been added and the mixture had only undergone mixing by a powder mixer, had a value reduced to about 90% of a value of sample #1, to which nanoparticles had not been added. This is thought to be because at least some of the nanoparticles were present between the metal particles to lower the attractive forces exerting between the metal particles and improve the flowability.

Furthermore, sample #2, in which nanoparticles had been added and the mixture had undergone the dispersing and classifying steps, had a bulk-density-normalized shear adhesive force reduced to about 40% of that of sample #1 as explained above. That value of shear adhesive force was also as low as about 45% of the value of sample #3. It can be seen from these results that although the effect of improving the flowability of metal particles is obtained by merely adding nanoparticles to the metal particles and mixing the mixture, the nanoparticles can be made to exhibit a higher effect in lowering attractive forces exerting between the metal particles to improve the flowability, by performing the dispersing and classifying steps.

Embodiments and examples of the present invention have been explained above. The present invention is not limited to these embodiments and examples, and various modifications can be made therein.

### INDUSTRIAL APPLICABILITY

From the powder material according to the present invention, three-dimensional shaped articles having a highly uniform and dense structure can be obtained.

This application is based on a Japanese patent application filed on November 8, 2019 (Application No. 2019-203093) and a Japanese patent application filed on October 21, 2020 (Application No. 2020-176818).

### REFERENCE SIGNS LIST

- P: Metal particles having adherent nanoparticles
- P1: Metal particle
- P2: Nanoparticle
- 1: Powder-material production device
- 10: (Air) disperser
- 11: Feed opening
- 13: Discharge opening
- 20: (Air) classifier
- 21: Feed opening
- 26: Coarse-powder zone
- 27: Fine-powder zone

## Claims

1. A powder material (P) comprising
metal particles (P1) comprising an iron alloy and having an average particle diameter, d50, of 10 µm or larger and 500 µm or smaller, and
nanoparticles (P2) that comprise a metal or a metal compound and that have undergone no surface treatment with an organic substance,
the nanoparticles (P2) constitute fused-bodies in each of which a plurality of nanoparticles (P2) is fusion-bonded to each other, **characterized in that**
the fused-bodies have a dendritic structure.

2. The powder material (P) according to claim 1, wherein the nanoparticles (P2) are adherent to the metal particles (P1).

3. The powder material (P) according to claim 1 or 2, wherein in the powder material, no agglomerates that are each composed of the nanoparticles (P2) and each has a particle diameter of 1 µm or larger are present between the metal particles (P1).

4. The powder material (P) according to claim 3, comprising no agglomerates that are each composed of the nanoparticles (P2) and each has a particle diameter of 1 µm or larger, in a state of being adherent to the metal particles (P1).

5. The powder material (P) according to any one of claims 1 to 4, wherein the iron alloy constituting the metal particles (P1) is a precipitation-hardening stainless steel.

6. The powder material (P) according to any one of claims 1 to 5, wherein the nanoparticles (P2) are silica particles.

## Patentansprüche

1. Pulvermaterial (P) mit
Metallpartikeln (P1), die eine Eisenlegierung beinhalten und einen durchschnittlichen Partikeldurchmesser, d50, von 10 µm oder größer und 500 µm oder kleiner aufweisen, und
Nanopartikeln (P2), die ein Metall oder eine Metallverbindung beinhalten und die keiner Oberflächenbehandlung mit einer organischen Substanz unterzogen wurden,
wobei die Nanopartikel (P2) verschmolzene Körper darstellen, in denen jeweils mehrere der Nanopartikel (P2) miteinander verschmolzen sind,
**dadurch gekennzeichnet, dass**
die verschmolzenen Körper eine dendritische Struktur aufweisen.

2. Pulvermaterial (P) gemäß Anspruch 1, wobei die Nanopartikel (P2) an den Metallpartikeln (P1) anhaften.

3. Pulvermaterial (P) gemäß Anspruch 1 oder 2, wobei in dem Pulvermaterial zwischen den Metallpartikeln (P1) keine Agglomerate vorhanden sind, die jeweils aus den Nanopartikeln (P2) aufgebaut sind und einen Partikeldurchmesser von 1 µm oder größer aufweisen.

4. Pulvermaterial (P) gemäß Anspruch 3, das keine Agglomerate aufweist, die im Zustand des Anhaftens an den Metallpartikel (P1) aus den Nanopartikeln (P2) aufgebaut sind und jeweils einen Partikeldurchmesser von 1 µm oder größer aufweisen.

5. Pulvermaterial (P) gemäß einem der Ansprüche 1 bis 4, wobei die die Metallpartikel (P1) darstellende Eisenlegierung ein ausscheidungshärtender rostfreier Stahl ist.

6. Pulvermaterial (P) gemäß einem der Ansprüche 1 bis 5, wobei die Nanopartikel (P2) Silicapartikel sind.

## Revendications

1. Matériau en poudre (P) comprenant
des particules métalliques (P1) comprenant un alliage de fer et ayant un diamètre moyen de particule, d50, de 10 µm ou plus et de 500 µm ou moins, et
des nanoparticules (P2) comprenant un métal ou un composé métallique et n'ayant subi aucun traitement de surface avec une substance organique,
les nanoparticules (P2) constituent des corps fusionnés dans chacun desquels une pluralité de nanoparticules (P2) sont liées par fusion les unes aux autres,
**caractérisé en ce que**
les corps fusionnés ont une structure dendritique.

2. Matériau en poudre (P) selon la revendication 1, dans lequel les nanoparticules (P2) adhèrent aux particules métalliques (P1).

3. Matériau en poudre (P) selon la revendication 1 ou 2, dans lequel, dans le matériau en poudre, aucun agglomérat composé de nanoparticules (P2) et ayant un diamètre de particule de 1 µm ou plus n'est présent entre les particules métalliques (P1).

4. Matériau en poudre (P) selon la revendication 3, ne comprenant aucun agglomérat composé de nanoparticules (P2) et ayant un diamètre de particule de 1 µm ou plus, dans un état d'adhérence aux particules métalliques (P1).

5. Matériau en poudre (P) selon l'une quelconque des revendications 1 à 4, dans lequel l'alliage de fer constituant les particules métalliques (P1) est un acier inoxydable à durcissement par précipitation.

6. Matériau en poudre (P) selon l'une quelconque des revendications 1 à 5, dans lequel les nanoparticules (P2) sont des particules de silice.
